# EUROPEAN PATENT APPLICATION

(11) **EP 3 272 891 A1**
(43) Date of publication of application: **24.01.2018**
(21) Application number: 16764459.0
(22) Date of filing: 10.03.2016
(51) Int. Cl.: C22C 21/00, B32B 15/20, F28F 21/08, B23K 35/28, C22F 1/04

(54) **ALUMINUM-ALLOY BRAZING SHEET FIN MATERIAL FOR HEAT EXCHANGER, AND PRODUCTION PROCESS THEREFOR**

(30) Priority: 14.03.2015 JP 2015051509
(71) Applicant: UACJ Corporation, Tokyo 100-0004 (JP)
(72) Inventor: NAKAGAWA, Wataru, Tokyo 100-0004 (JP); TANAKA, Satoshi, Tokyo 100-0004 (JP); TERAYAMA, Kazuko, Tokyo 100-0004 (JP)
(74) Representative: TBK
(86) International application number: PCT/JP2016/001358
(87) International publication number: WO 2016/147627

(57) **Abstract**

The present invention provides: an aluminum-alloy brazing sheet fi material for heat exchangers which has high strength after heating for brazing and further has satisfactory resistance to high-temperature bucking, brazeability, and resistance to self-corrosion; and a process for producing the brazing sheet fin material. The aluminum-alloy brazing sheet fin material according to the present invention is a fin material that comprises a core material, both surfaces of which have been clad with a brazing material, wherein the core material and the brazing material each have a given aluminum alloy composition. Before heating for brazing, the fin material has an average degree of cladding of 6 to 16% for each surface, a thickness of 40 to 120 µm and an electrical conductivity of 48 to 54% IACS and the core material has a metallographic structure having a distribution in which a Mn-based compound having an equivalent circular diameter of 0.05 to 0.50 µm is present at an average distance between particles of 0.05 to 0.35 µm. After heating for brazing, the fin material has an electrical conductivity of 40 to 44% IACS and the core material has a metallographic structure having a distribution in which a Mn-based compound having an equivalent circular diameter of 0.50 µm or less is present at an average distance between particles of 0.45 µm or less.

## Description

### Technical Field

The present invention relates to an aluminum-alloy brazing sheet fin material for heat exchangers, which has excellent strength after heating for brazing and further has excellent resistance to high-temperature buckling, brazeability, and resistance to self-corrosion, and a process for producing the brazing sheet fin material. The aluminum-alloy brazing sheet fin material of the invention is advantageously used as a fin material for a heat exchanger, especially for use in an automobile.

### Background Art

An aluminum alloy is lightweight and has excellent strength, and further has excellent thermal conductivity and therefore is advantageously used as a material for heat exchanger.

In recent years, in all the industries, saving resources and energy is a task that must be achieved. In the automobile industry, for achieving the task, the development of lightweight automobile is being made. In accordance with the tendency toward the weight reduction, the heat exchanger for automobile is reduced in weight and size, and structural materials having a reduced thickness are demanded. For achieving a structural material having a reduced thickness which can be used in a heat exchanger while ensuring the rigidity of the heat exchanger, an improvement of the strength after heating for brazing for each member is expected. In accordance with this, a brazing sheet fin material having a reduced thickness and an increased strength is desired.

Under the circumstances, in heat exchangers for automobile, such as a condenser and an evaporator, those made of an aluminum alloy are widely used. Further, recently, also in heat exchangers for room cooler, those made of an aluminum alloy are spreading. These heat exchangers are formed from a member functioning as a passageway for a working fluid and a fin material functioning as a heat transfer medium, and are produced by jointing these members by brazing. Jointing by brazing is carried out by a process in which a constituent member containing therein a brazing material is heated to about 600°C and the molten brazing filler metal is supplied to a joint and the gap in the joint is filled with the brazing filler metal, followed by cooling. Particularly, in the heat exchanger for automobile, a method is generally employed in which a member, such as a tube or corrugated fin having a fluoride flux deposited, is incorporated to a predetermined structure, followed by jointing by brazing in a heating oven having an inert gas atmosphere.

A general brazing sheet for heat exchanger is a clad material having an Al-Mn alloy core material, such as JIS-A3003 or JIS-A3203, one surface or both surfaces of which have been clad with an Al-Si alloy brazing material, such as JIS-A4343 or JIS-A4045. However, such a brazing sheet formed from a general alloy has a problem in that it exhibits a poor strength after heating for brazing and therefore it is difficult to reduce the thickness of the brazing sheet.

For solving the above problem, various studies have been made on the material constitution and production process for a brazing sheet fin material with a view toward developing a brazing sheet fin material having a reduced thickness and an improved strength.

For example, PTL 1 has proposed a brazing sheet fin material having excellent strength after heating for brazing, which is obtained by adding Ni to the core material. However, there is a large potential difference between an intermetallic compound containing Ni and the parent phase, and therefore the intermetallic compound containing Ni is likely to be a starting point of corrosion, and thus the brazing sheet fin material has a poor resistance to self-corrosion and a problem about the practical use.

PTL 2 has proposed a three-layer clad fin material having excellent strength after heating for brazing, which is obtained by restricting the thickness of the cover material and the Si content of the cover material. However, this fin material is used in combination with a member having a brazing material layer as described in the specification at paragraph number 0011, and therefore has a problem in that the fin material cannot be used as a brazing sheet fin material having a brazing filler metal supplying function.

PTL 3 has proposed a brazing sheet fin material having excellent strength after heating for brazing, which is obtained by forming subgrains in the core material after heating for brazing. However, as described in Table 4 and the like of the literature, this plate fin material has a problem in that brazing penetration into the core material occurs to cause the resistance to high-temperature buckling to be poor, so that the plate fin material cannot be applied to a corrugated fin material.

As mentioned above, for obtaining the brazing sheet fin material having a reduced thickness, to achieve both improving the strength after heating for brazing and securing various properties is a problem to be solved.

### Citation List

### Patent Literature

PTL 1: Japanese Patent No.3407965
PTL 1: JP-A-2007-146264
PTL 1: JP-A-2012-224923

### Summary of Invention

### Technical Problem

The present invention has been made for solving the above-mentioned problems, and an object of the invention is to provide an aluminum-alloy brazing sheet fin material for heat exchangers, which has excellent strength after heating for brazing and further has excellent resistance to high-temperature buckling, brazeability, and resistance to self-corrosion, and a process for producing the same.

### Solution to Problem

In view of the above, the present inventors have conducted extensive and intensive studies. As a result, it has been found that an aluminum-alloy brazing sheet fin material having a specific metallographic structure can be produced by using an aluminum alloy material having a specific component and selecting specific slab cooling conditions, laminated material heating conditions, laminated material hot rolling conditions, cold rolling conditions, and annealing conditions.

Specifically, with respect to the core material, the Si and Fe contents are limited, and further the Mn content is controlled to be larger than the sum of the Si and Fe contents. The thus incorporated aluminum alloy melt is prepared by a direct chill casting process. In the casting step, the average cooling rate of the solidified aluminum alloy is increased to a predetermined value or more to obtain a core material slab. When the core material slab is subjected to homogenizing treatment, the treatment is not conducted at a high temperature. The thus prepared core material slab can suppress precipitation of an Al-Mn-based intermetallic compound, an Al-Si-Mn-based intermetallic compound, an Al-Fe-Mn-based intermetallic compound, and an Al-Si-Fe-Mn-based intermetallic compound (hereinafter, these intermetallic compounds are referred to as "Mn-based compound") to secure a suitable Mn dissolved amount. As a result, excellent strength is obtained after heating for brazing, so that a resistance to high-temperature buckling can be secured. On the other hand, with respect to the brazing material, the Si and Fe contents are controlled to be suitable amounts, and thus brazing fluidity upon heating for brazing can be secured, and further excellent strength can be obtained due to diffusion of Si into the core material during the heating for brazing, so that a resistance to high-temperature buckling can be secured.

When the laminated material having the core material slab and the brazing material is subjected to hot lamination rolling to obtain a clad material, heating of the laminated material is performed at a low temperature, and the hot lamination rolling is performed while controlling the temperature of the rolled sheet during the hot lamination rolling to be a low temperature. Thus, precipitation of the Mn-based compound in the core material is suppressed, so that a suitable Mn dissolved amount can be secured.

Then, when subjecting the clad material after the hot lamination rolling to cold rolling, the cold rolling is conducted at a high rolling ratio without annealing the clad material. In the annealing step after the cold rolling, annealing is conducted at an annealing temperature as low as 400°C or less. By controlling the cold rolling ratio and the annealing conditions, a very fine Mn-based compound densely precipitates in the core material. In the annealing step, the Mn dissolved amount is reduced, but, at a time of completion of the hot lamination rolling, a suitable Mn dissolved amount is secured, and therefore fine dispersion of the Mn-based compound and securing the Mn dissolved amount are achieved with excellent balance at a time of completion of the annealing. Irrespective of whether the clad material after the annealing is further subjected to cold rolling (hereinafter, the cold rolling after the annealing is referred to as "final rolling") or not, excellent balance is secured between the distribution of the Mn-based compound and the Mn dissolved amount in the clad material obtained after the annealing step, and therefore the brazing sheet fin material having a final thickness has a metallographic structure having an electrical conductivity and an average distance between particles of the Mn-based compound each at a given level.

The brazing sheet fin material having the amount of heat input during the production process controlled to be reduced as mentioned above is advantageous not only in that a suitable Mn dissolved amount in the core material after heating for brazing can be secured, but also in that Mn dissolved in the core material is bonded to Si diffused from the brazing material to form a Mn-based compound, and Mn is further dissolved at around 600°C which is the temperature of heating for brazing, making it possible to suppress an increase of the Mn-based compound in the material. Therefore, after heating for brazing, an effect of solid solution strengthening of Mn and an effect of dispersion strengthening of the Mn compound can be obtained with excellent balance.

For suppressing brazing penetration into the core material during the heating for brazing to secure a resistance to self-corrosion, it is necessary to appropriately control the degree of processing into the brazing sheet fin material having a final thickness. When the core material for the clad material is subjected to recrystallization in the annealing step, cold rolling is conducted at a higher rolling ratio in the cold rolling step after the annealing. On the other hand, when the core material for the clad material is not subjected to recrystallization in the annealing step, cold rolling is conducted at a lower rolling ratio in the cold rolling step after the annealing, or cold rolling is not conducted. Thus, both when the core material is subjected to recrystallization and when the core material is not subjected to recrystallization, the core material is prevented from undergoing recrystallization into coarse grains during the heating for brazing to cause brazing penetration into the core material, so that a resistance to self-corrosion can be secured. Taking into consideration the formability in the corrugation forming facility, selection may be made as to whether or not the core material is subjected to recrystallization in the annealing step.

Thus, the present inventors have found that the problems of the invention can be solved, and the present invention has been completed.

Specifically, the present invention, in claim 1, is directed to an aluminum-alloy clad brazing sheet fin material for heat exchangers having a core material and an Al-Si-based alloy brazing material clad on both surfaces of the core material,
wherein the core material comprises an aluminum alloy comprising 0.05 to 0.8 mass% Si, 0.05 to 0.8 mass% Fe, 0.8 to 2.0 mass% Mn and a balance of Al and unavoidable impurities, and the aluminum alloy satisfies a condition of Si content+Fe content≤Mn content,
the brazing material comprises the Al-Si-based alloy comprising 6.0 to 13.0 mass% Si, 0.05 to 0.8 mass% Fe and a balance of Al and unavoidable impurities,
before heating for brazing, the fin material has an average degree of cladding of 6 to 16% for each surface, a thickness of 40 to 120 µm and an electrical conductivity of 48 to 54% IACS and the core material has a metallographic structure having a distribution in which a Mn-based compound having an equivalent circular diameter of 0.05 to 0.50 µm is present at an average distance between particles of 0.05 to 0.35 µm, and
after heating for brazing, the fin material has an electrical conductivity of 40 to 44% IACS and the core material has a metallographic structure having a distribution in which a Mn-based compound having an equivalent circular diameter of 0.50 µm or less is present at an average distance between particles of 0.45 µm or less.

In claim 2 of the invention, the core material comprises the aluminum alloy further comprising 0.3 to 3.0 mass% Zn, in claim 1.

In claim 3 of the invention, the core material comprises the aluminum alloy further comprising 0.05 to 0.5 mass% Cu, in claim 1 or 2.

In claim 4 of the invention, the core material comprises the aluminum alloy further comprising one or, two or more selected from 0.05 to 0.3 mass% Zr, 0.05 to 0.3 mass% Ti, 0.05 to 0.3 mass% Cr and 0.05 to 0.3 mass% V, in any one of claims 1 to 3.

In claim 5 of the invention, the brazing material comprises the aluminum alloy further comprising 0.3 to 3.0 mass% Zn, in any one of claims 1 to 4.

In claim 6 of the invention, the brazing material comprises the aluminum alloy further comprising 0.1 to 0.7 mass% Cu, in any one of claims 1 to 5.

In claim 7 of the invention, the brazing material comprises the aluminum alloy further comprising one or two selected from 0.003 to 0.05 mass% Na and 0.003 to 0.05 mass% Sr, in any one of claims 1 to 6.

In claim 8 of the invention, the aluminum-alloy clad brazing sheet fin material has a tensile strength of 130 MPa or more after heating for brazing, in any one of claims 1 to 7.

The present invention, in claim 9, is directed to a method for producing the aluminum-alloy brazing sheet fin material for heat exchangers according to any one of claims 1 to 8, comprising:
a casting step of the aluminum alloys for the core material and the brazing material, respectively, by a direct chill casting process,
a hot lamination rolling step of subjecting to hot rolling a laminated material having the core material and the brazing material rolled to have a predetermined thickness stacked on both surfaces of the core material,
a primary cold rolling step of subjecting to cold rolling the clad material after the hot lamination rolling step without annealing the clad material during cold rolling,
an annealing step of annealing the clad material after the primary cold rolling step, and
a secondary cold rolling step of subjecting to cold rolling the clad material after the annealing step so as to have a final thickness without annealing the material during cold rolling,
wherein, in the casting step for the core material, the average cooling rate at which the core material slab after solidified is cooled from 550 to 200°C is 0.10°C/second or more,
wherein a homogenizing treatment step of subjecting the core material slab to homogenizing treatment at a temperature of 510°C or higher is not provided,
wherein, in the hot lamination rolling step, the heating temperature for the laminated material is 420 to 500°C, and the temperature of the rolled sheet at a time when the hot rolling ratio has reached 10% is 370 to 450°C,
wherein, in the primary cold rolling step, the cold rolling ratio is 85.0 to 99.5%,
wherein, in the annealing step, the core material is subjected to recrystallization at an annealing temperature of 300 to 450°C and, in the secondary cold rolling step, the cold rolling ratio is 10 to 85%.

The present invention, in claim 10, is directed to a method for producing the aluminum-alloy brazing sheet fin material for heat exchangers according to any one of claims 1 to 8, comprising:
a casting step of the aluminum alloys for the core material and the brazing material, respectively, by a direct chill casting process,
a hot lamination rolling step of subjecting to hot rolling a laminated material having the core material and the brazing material rolled to have a predetermined thickness stacked on both surfaces of the core material,
a primary cold rolling step of subjecting to cold rolling the clad material after the hot lamination rolling step without annealing the clad material during cold rolling,
an annealing step of annealing the clad material after the primary cold rolling step, and
a secondary cold rolling step of subjecting to cold rolling the clad material after the annealing step so as to have a final thickness without annealing the material during cold rolling,
wherein, in the casting step for the core material, the average cooling rate at which the core material slab after solidified is cooled from 550 to 200°C is 0.10°C/second or more,
wherein a homogenizing treatment step of subjecting the core material slab to homogenizing treatment at a temperature of 510°C or higher is not provided,
wherein, in the hot lamination rolling step, the heating temperature for the laminated material is 420 to 500°C, and the temperature of the rolled sheet at a time when the hot rolling ratio has reached 10% is 370 to 450°C,
wherein, in the primary cold rolling step, the cold rolling ratio is 85.0 to 99.5%,
wherein, in the annealing step, the core material is not subjected to recrystallization at an annealing temperature of 150°C or higher to 300°C or lower, in the secondary cold rolling step, the cold rolling ratio is 3 to 40%.

In claim 11 of the invention, the method further comprises an annealing step of annealing the rolled sheet at a temperature of 300°C or lower after the secondary cold rolling step, in claim 9 or 10.

The present invention, in claim 12, is directed to a method for producing the aluminum-alloy brazing sheet fin material for heat exchangers according to any one of claims 1 to 8, comprising:
a casting step of the aluminum alloys for the core material and the brazing material, respectively, by a direct chill casting process,
a hot lamination rolling step of subjecting to hot rolling a laminated material having the core material and the brazing material rolled to have a predetermined thickness stacked on both surfaces of the core material,
a cold rolling step of subjecting to cold rolling the clad material after the hot lamination rolling step so as to have a final thickness without annealing the material during cold rolling,
an annealing step of annealing the clad material after the cold rolling step,
wherein, in the casting step for the core material, the average cooling rate at which the core material slab after solidified is cooled from 550 to 200°C is 0.10°C/second or more,
wherein a homogenizing treatment step of subjecting the core material slab to homogenizing treatment at a temperature of 510°C or higher is not provided,
wherein, in the hot lamination rolling step, the heating temperature for the laminated material is 420 to 500°C, and the temperature of the rolled sheet at a time when the hot rolling ratio has reached 10% is 370 to 450°C,
wherein, in the cold rolling step, the cold rolling ratio is 85.0 to 99.5%,
wherein, in the annealing step, the core material is not subjected to recrystallization at an annealing temperature of 150°C or higher to lower than 300°C.

In claim 13 of the invention, the method further comprises a homogenizing treatment step of subjecting the core material slab to homogenizing treatment at a temperature of lower than 510°C after the casting step for the core material, in any of claims 9 to 12.

In claim 14 of the invention, wherein, in the casting step for the core material, the average cooling rate when a molten metal is solidified is 0.5°C/second or more, in any of claims 9 to 13.

In claim 15 of the invention, wherein, when the laminated material is heated, a temperature elevation time required until the temperature has reached the heating temperature is 15 hours or less, in any of claims 9 to 14.

In claim 16 of the invention, wherein the temperature of the rolled sheet at a time of completion of the hot lamination rolling step is lower than 370°C, in any one of claims 9 to 15.

### Advantageous Effects of Invention

The present invention provides the aluminum-alloy brazing sheet fin material for heat exchangers which has high strength after heating for brazing and a thin thickness, and a process for producing the same. Further, this brazing sheet fin material has excellent resistance to high-temperature buckling, brazeability, and resistance to self-corrosion. Accordingly, the brazing sheet fin material of the present invention is advantageously used as a fin for a heat exchanger.

### Brief Description of Drawings

[Fig. 1] Diagrammatic views of the evaluation of the resistance to high-temperature buckling using a sag test apparatus in the invention.
[Fig. 2] A diagrammatic front view of the test specimen used in the evaluation of the brazeability and resistance to self-corrosion in the invention.

### Description of Embodiments

The aluminum-alloy brazing sheet fin material for heat exchangers of the invention and the method for producing the same will be described in detail.

### 1. Aluminum-alloy brazing sheet fin material

The aluminum-alloy brazing sheet fin material for heat exchangers of the invention has predetermined aluminum alloy compositions for a core material and a brazing material, and further has a predetermined thickness and degree of cladding as well as a predetermined electrical conductivity and metallographic structure before and after heating for brazing.

### 1-1. Core material

The core material has Si, Fe, and Mn as essential elements. Si in the core material contributes to an improvement of the strength and resistance to high-temperature buckling. The Si content is 0.05 to 0.8% by mass (hereinafter, referred to simply as "%"). When the Si content is less than 0.05%, the Mn-based compound is not satisfactorily formed, so that a satisfactory strength cannot be obtained after heating for brazing. On the other hand, when the Si content is more than 0.8%, the Mn-based compound is excessively formed and a suitable Mn dissolved amount cannot be secured before heating for brazing, so that a satisfactory strength cannot be obtained after heating for brazing. Further, the melting point of the core material is lowered and therefore brazing penetration into the core material occurs, so that the resistance to self-corrosion becomes poor. A Si content preferred of the core material is 0.1 to 0.7%, and a more preferred Si content is 0.1 to 0.6%.

Fe in the core material contributes to an improvement of the strength and stabilization of the crystal structure. The Fe content of the core material is 0.05 to 0.8%. When the Fe content is less than 0.05%, the Mn-based compound is not satisfactorily formed, so that a satisfactory strength cannot be obtained after heating for brazing. On the other hand, when the Fe content is more than 0.8%, the Mn-based compound is excessively formed and a suitable Mn dissolved amount cannot be secured before heating for brazing, so that a satisfactory strength cannot be obtained after heating for brazing. Further, a potential difference between an intermetallic compound containing Fe and the parent phase is large, and hence the intermetallic compound containing Fe is likely to be a starting point of corrosion. Therefore, when the Fe content is more than 0.8%, the intermetallic compound containing Fe is excessively formed, so that the resistance to self-corrosion becomes poor. Further, crystal grains of the core material after heating for brazing become very fine, so that a resistance to high-temperature buckling and a resistance to self-corrosion cannot be secured. A preferred Fe content of the core material is 0.1 to 0.8%, and a more preferred Fe content is 0.1 to 0.7%.

Mn in the core material contributes to an improvement of the strength and resistance to high-temperature buckling. The Mn content of the core material is 0.8 to 2.0%. When the Mn content is less than 0.8% by mass, a suitable Mn dissolved amount in the core material of the brazing sheet fin material cannot be secured, and the formation of the Mn-based compound is insufficient, so that a satisfactory strength cannot be obtained after heating for brazing. On the other hand, when the Mn content is more than 2.0% by mass, a coarse precipitation material is formed upon casting, making the production difficult. A preferred Mn content of the core material is 0.8 to 1.9%, and a more preferred Mn content is 0.9 to 1.9%.

Further, the alloy of the core material satisfy the condition: Si content+ Fe contents≤Mn content. When the total content of Si and Fe is more than the Mn content, the contained Mn and Si and Fe together form a Mn-based compound. Therefore, a suitable Mn dissolved amount in the core material cannot be secured, so that a satisfactory strength cannot be obtained after brazing. Further, grains caused by recrystallization of the core material after heating for brazing become very fine, so that a resistance to high-temperature buckling and a resistance to self-corrosion cannot be secured. The preferred condition is as follows: Si content+ Fe content<0.9 Mn content.

In addition to the above-mentioned essential elements, Zn may be added to the core material as a first optional additive element. Zn is an alloy element which reduces the potential of the fin material. By adding Zn, the fin material is reduced in the potential so that a sacrificial protection function is imparted to the fin material, improving the tube material in corrosion resistance. The Zn content may be appropriately selected taking into consideration the potential of the tube material or other members, but is 0.3 to 3.0%. When the Zn content is less than 0.3%, a satisfactory sacrificial protection effect cannot be obtained. On the other hand, when the Zn content is more than 3.0%, the corrosion rate is increased, so that a resistance to self-corrosion of the fin material cannot be secured. A preferred Zn content of the core material is 0.5 to 2.7%, and a more preferred Zn content is 0.7 to 2.5%.

Cu may be further added to the core material as a second optional additive element. Cu is an alloy element which contributes to an improvement of the strength. The Cu content is 0.05 to 0.5%. When the Cu content is less than 0.05%, a strength improvement effect is insufficient. On the other hand, when the Cu content is more than 0.5%, the resistance to intergranular corrosion susceptibility becomes poor, so that a resistance to self-corrosion of the fin material cannot be secured. A preferred Cu content of the core material is 0.05 to 0.3%, and a more preferred Cu content is 0.05 to 0.25%.

As a third optional additive element, one element or two or more elements selected from Zr, Ti, Cr, and V may be further added to the core material. All of Zr, Ti, Cr, and V are an alloy element which improves the strength and resistance to high-temperature buckling. The content or contents of one element or two or more elements selected from Zr, Ti, Cr, and V are individually 0.05 to 0.3%. When each content is less than 0.05%, the above-mentioned effect cannot be satisfactorily obtained. On the other hand, when each content is more than 0.3%, a coarse precipitation material is disadvantageously formed upon casting. Preferred contents of the above elements are individually 0.05 to 0.2%, and more preferred contents are individually 0.1 to 0.2%.

### 1-2. Brazing material

The brazing material has Si and Fe as essential elements. Si in the brazing material contributes to the melting point and brazing flow amount. Further, in the case of the brazing sheet fin material, Si in the brazing material is diffused into the core material during the heating for brazing to form a Mn-based compound in the core material, or to be dissolved in the parent phase of the core material. The Si content of the brazing material is 6.0 to 13.0%. When the Si content is less than 6.0%, the amount of Si diffused from the brazing material into the core material is insufficient, so that a satisfactory strength cannot be obtained after heating for brazing. Further, the brazing fluidity is insufficient, so that brazeability cannot be secured. On the other hand, when the Si content is more than 13.0%, the Mn-based compound formed from Si diffused from the brazing material during the heating for brazing and Mn dissolved in the core material excessively precipitates and a suitable Mn dissolved amount cannot be secured after heating for brazing, so that a satisfactory strength cannot be obtained after heating for brazing. Further, the liquid phase amount of the brazing material during the heating for brazing is excessive, so that a resistance to self-corrosion cannot be secured. A preferred Si content of the brazing material is 7.0 to 13.0%, and a more preferred Si content is 7.0 to 12.0%.

Fe in the brazing material contributes to brazing fluidity and a resistance to self-corrosion. The Fe content of the brazing material is 0.05 to 0.8% by mass. When the Fe content is less than 0. 05%, brazing fluidity cannot be secured. On the other hand, when the Fe content is more than 0.8%, a resistance to self-corrosion cannot be secured. A preferred Fe content of the brazing material is 0.05 to 0.7%, and a more preferred Fe content is 0.1 to 0.6%.

In addition to the above-mentioned essential elements, Zn may be added to the brazing material as a first optional additive element. Zn contributes to an improvement of the fin material in sacrificial protection effect. The Zn content of the brazing material may be appropriately selected taking into consideration the Zn content of the core material and the potential of the tube material or other members, but is 0.3 to 3.0%. When the Zn content is less than 0.3%, a sacrificial protection effect cannot be satisfactorily obtained. On the other hand, when the Zn content is more than 3.0%, a resistance to self-corrosion of the fin material cannot be secured. A preferred Zn content of the brazing material is 0.5 to 2.7%, and a more preferred Zn content is 0.7 to 2.5%.

Cu may be further added to the brazing material as a second optional additive element. Cu is diffused in the core material during the heating for brazing to contribute to an improvement of the strength of the core material. The Cu content is 0.1 to 0.7%. When the Cu content is less than 0.1%, a strength improvement effect cannot be satisfactorily obtained. On the other hand, when the Cu content is more than 0.7%, the resistance to intergranular corrosion susceptibility becomes poor, so that a resistance to self-corrosion of the fin material cannot be secured. A preferred Cu content of the brazing material is 0.1 to 0.6%, and a more preferred Cu content is 0.2 to 0.5%.

At least one of Na and Sr may be further added to the brazing material as a third optional additive element. Both Na and Sr are an element which contributes to the brazing fluidity. The content of at least one of Na and Sr is 0.003 to 0.05%. When the Na or Sr content is less than 0.003%, the above-mentioned effect cannot be obtained. On the other hand, when the Na or Sr content is more than 0.05%, the above-mentioned effect cannot be obtained. A preferred Na or Sr content of the brazing material is 0.005 to 0.02%, and a more preferred Na or Sr content is 0.007 to 0.02%.

The core material and brazing material used in the invention may contain Mg, Ca, and other unavoidable impurity elements in such an amount that they do not affect the properties of the materials, and, when the content of each element is 0. 05% or less and the total content of these elements is 0.15% or less, the elements do not affect the effects of the invention and hence are acceptable.

### 1-3. Thickness

The aluminum-alloy brazing sheet fin material of the invention has a thickness of 40 to 120 µm, preferably 40 to 100 µm. When the thickness of the brazing sheet fin material is less than 40 µm, it is difficult to control a dispersion of the degree of cladding or the thickness, so that the quality of the industrial product is difficult to secure. On the other hand, when the thickness of the brazing sheet fin material is more than 120 µm, the brazing sheet fin material cannot contribute to the weight reduction of a heat exchanger.

### 1-4. Degree of cladding

Next, the degree of cladding of the brazing material is described. The degree of cladding of the brazing material contributes to the brazing flow amount. In the brazing sheet fin material, the degree of cladding of the brazing material contributes to not only the brazing flow amount during the heating for brazing but also the amount of Si diffused from the brazing material into the core material. In the invention, the average degree of cladding of the brazing material for each surface is 6 to 16%. When the degree of cladding is less than 6%, the amount of Si diffused from the brazing material into the core material during the heating for brazing is insufficient, so that a satisfactory strength improvement due to dispersion strengthening cannot be obtained after heating for brazing. Further, the brazing flow amount is insufficient, so that brazeability cannot be secured. On the other hand, when the degree of cladding is more than 16%, the amount of Si diffused from the brazing material into the core material during the heating for brazing becomes excessive and a Mn-based compound is formed in the core material, so that the Mn dissolved amount in the core material is reduced. As a result, a satisfactory strength improvement due to solid solution strengthening cannot be obtained after heating for brazing. Further, the liquid phase amount of the brazing material during the heating for brazing is excessive, so that a resistance to self-corrosion cannot be secured. A preferred average degree of cladding of the brazing material for each surface is 7 to 15%, and a more preferred average degree of cladding for each surface is 8 to 14%.

### 1-5. Electrical conductivity

There is a correlation between the electrical conductivity of the brazing sheet fin material before heating for brazing and the dissolved amount of the element added to the core material. There is a correlation between the electrical conductivity of an Al-Mn alloy, such as the core material used in the invention, and the Mn dissolved amount. As mentioned above, for obtaining a satisfactory strength after heating for brazing, it is necessary to secure a suitable Mn dissolved amount in the core material before heating for brazing. Therefore, the electrical conductivity of the brazing sheet fin material before heating for brazing is 48 to 54% IACS (International Annealed Copper Standard). When the electrical conductivity is less than 48% IACS, the Mn dissolved amount in the core material is excessive and thus the formation of the Mn-based compound is insufficient, so that a satisfactory strength improvement due to dispersion strengthening cannot be obtained after heating for brazing. On the other hand, when the electrical conductivity is more than 54% IACS, the Mn dissolved amount in the core material before heating for brazing is insufficient, so that a satisfactory strength improvement due to solid solution strengthening cannot be obtained after heating for brazing. A preferred electrical conductivity before heating for brazing is 49 to 54% IACS, and a more preferred electrical conductivity is 49 to 53% IACS.

Further, there is a correlation between the electrical conductivity of the brazing sheet fin material after heating for brazing and the Mn dissolved amount in the core material. During the heating for brazing, Mn dissolved in the core material is bonded to Si diffused from the brazing material and the amount of the Mn dissolved is reduced, but part of the Mn dissolved remains after heating for brazing, so that an effect of solid solution strengthening can be obtained. Therefore, the electrical conductivity of the brazing sheet fin material after heating for brazing is in the range of from 40 to 44% IACS. When the electrical conductivity is less than 40% IACS, the thermal conductivity is such low that heat exchange performance for a heat exchanger cannot be secured. On the other hand, when the electrical conductivity is more than 44% IACS, the solid solution strengthening is insufficient, so that a satisfactory strength cannot be obtained after heating for brazing. A preferred electrical conductivity after heating for brazing is 41 to 44% IACS, and a more preferred electrical conductivity is 41 to 43% IACS. The reason why the electrical conductivity after heating for brazing is lower than that before heating for brazing is that Si diffused from the brazing material during the heating for brazing is dissolved in the core material.

### 1-6. Metallographic structure

When the core material has a suitable metallographic structure after heating for brazing, an effect of dispersion strengthening for the brazing sheet fin material can be obtained. The metallographic structure of the core material after heating for brazing is affected by the metallographic structure of the core material before heating for brazing. Therefore, for obtaining a suitable core material metallographic structure after heating for brazing, it is necessary to define the metallographic structure of the core material before heating for brazing. The Mn-based compound formed in the production process is distributed in the core material before heating for brazing. Therefore, with respect to the metallographic structure, the distribution state of the Mn-based compound is defined. Specifically, before heating for brazing, the core material has a metallographic structure having a distribution state in which a Mn-based compound having an equivalent circular diameter (which corresponds to an equivalent circular diameter, and this applies to the followings) of 0.05 to 0.50 µm is present at an average distance between particles of 0.05 to 0.35 µm. With respect to the Mn-based compound having an equivalent circular diameter of 0.05 to 0.50 µm, part of the Mn-based compound is further dissolved during the heating for brazing, but most of the Mn-based compound remains after heating for brazing, and, by virtue of the remaining Mn-based compound, an effect of dispersion strengthening can be obtained in the fin material after heating for brazing. Most of the Mn-based compound having an equivalent circular diameter of less than 0.05 µm is further dissolved during the heating for brazing. Further, the Mn-based compound having an equivalent circular diameter of more than 0.50 µm is even smaller in density than the Mn-based compound having an equivalent circular diameter of 0.05 to 0.50 µm, and causes almost no change in the average distance between particles. Therefore, the Mn-based compound having an equivalent circular diameter of 0.05 to 0.50 µm is included in the Mn-based compound for defining the metallographic structure, and the Mn-based compound having an equivalent circular diameter of less than 0.05 µm and the Mn-based compound having an equivalent circular diameter of more than 0.50 µm are not included.

When the average distance between particles of the Mn-based compound having an equivalent circular diameter of 0.05 to 0.50 µm distributed in the core material before heating for brazing is less than 0.05 µm, the amount of the Mn-based compound present in the core material is excessive, so that a Mn dissolved amount in the core material cannot be satisfactorily secured. As a result, a satisfactory strength improvement due to solid solution strengthening cannot be obtained after heating for brazing. On the other hand, when the average distance between particles is more than 0.35 µm, the amount of the Mn-based compound distributed in the core material is insufficient, so that a satisfactory strength improvement due to dispersion strengthening cannot be obtained after heating for brazing. The preferred average distance between particles is 0.07 to 0.32 µm, and the more preferred average distance between particles is 0.10 to 0.30 µm.

In the core material after heating for brazing, the Mn-based compound formed in the production process for the material and the Mn-based compound formed during the heating for brazing are distributed. Among these Mn-based compounds, by virtue of the Mn-based compound having an equivalent circular diameter of 0.50 µm or less, an effect of dispersion strengthening can be obtained in the fin material after heating for brazing. Therefore, with respect to the metallographic structure of the core material after heating for brazing, the distribution state of the Mn-based compound is defined. Specifically, after heating for brazing, the core material has a metallographic structure having a distribution state in which a Mn-based compound having an equivalent circular diameter of 0.50 µm or less is present at an average distance between particles of 0.45 µm or less. The Mn-based compound having an equivalent circular diameter of more than 0.50 µm is even smaller in density than the Mn-based compound having an equivalent circular diameter of 0.50 µm or less, and causes almost no change in the average distance between particles, and therefore such a Mn-based compound is not included in the compound for defining the metallographic structure. When the average distance between particles is more than 0.45 µm, the Mn-based compound distributed in the core material is insufficient, so that a satisfactory strength due to dispersion strengthening cannot be obtained after heating for brazing. The preferred average distance between particles after heating for brazing is 0.40 µm or less, and the more preferred average distance between particles is 0.35 µm or less. With respect to the lower limit of the average distance between particles, there is no particular limitation, but the lower limit depends on the aluminum alloy composition of the core material used in the invention and the method for producing the core material, and, in the invention, the lower limit is about 0.10 µm.

The aluminum-alloy brazing sheet fin material having the above-mentioned alloy composition and material properties has excellent strength after heating for brazing even when having a reduced thickness, and further has excellent resistance to high-temperature buckling, brazeability, and resistance to self-corrosion.

### 2. Method for producing the aluminum-alloy brazing sheet fin material

The method for producing the aluminum-alloy brazing sheet fin material for heat exchangers of the invention is described below.

### 2-1. Characteristic feature of the production method

An Al unwrought product or an Al master alloy is first melted using a melting furnace, and the components of the resultant melt are controlled so that a brazing material alloy or core material alloy having a predetermined aluminum alloy composition is obtained. The melt is cast by a direct chill casting process to obtain a slab of the brazing material or core material. The core material slab is not subjected to homogenizing treatment, or is subjected to homogenizing treatment which is not at a high temperature. Then, the brazing material slab and the core material slab are machined. Taking the thickness of the core material slab into consideration, the brazing material slab is subjected to hot rolling to prepare a brazing material rolled sheet having a thickness such that a predetermined degree of cladding can be achieved. The brazing material rolled sheet is stacked on both surfaces of the core material slab to obtain a laminated material. The laminated material is heated to a predetermined temperature to start hot lamination rolling. The temperature of the rolled sheet is controlled so that the rolled sheet has a predetermined temperature at a time when a predetermined hot rolling ratio is achieved, obtaining a clad material. The clad material is subjected to primary cold rolling at a high rolling ratio without annealing the obtained clad material during cold rolling, and the resultant cold rolled material is annealed under predetermined heating conditions. Then, the resultant rolled material is subjected to secondary cold rolling to obtain a brazing sheet fin material having a predetermined final thickness. Alternatively, a brazing sheet fin material may be obtained by subjecting the clad material which has been subjected to hot lamination rolling to cold rolling at a high rolling ratio so as to have a final thickness without annealing the clad material during cold rolling, and then annealing the resultant cold rolled material under predetermined heating conditions.

For controlling the metallographic structure of the core material defined in the invention, it is necessary to appropriately control the heat input to the material in the production process. Therefore, the heat input to the material in the core material casting step, homogenizing treatment step, hot lamination rolling step, and annealing step is controlled as described below. The heat input to the material during the cold rolling is slight and therefore has almost no effect on the metallographic structure, but the cold rolling ratio has an effect on the control of the structure in the subsequent annealing step and therefore is controlled.

### 2-2. Casting step

Aluminum alloys respectively for the core material and the brazing material are individually cast by a direct chill casting process. The metallographic structure of a slab of the core material varies depending on the cooling rate upon solidifying the melt and the cooling rate of the slab after solidified in the casting step. By increasing these cooling rates, a suitable Mn dissolved amount in the core material slab can be secured, so that a Mn dissolved amount in the core material before heating for brazing can be secured.

The average cooling rate upon solidifying the melt is preferably 0.5°C/second or more. When the average cooling rate is less than 0.5°C/second, the Mn-based compound excessively precipitates in the cooling process, so that a Mn dissolved amount cannot be satisfactorily secured. Increasing the cooling rate upon solidifying the melt is achieved by at least one of reducing the temperature of the melt, increasing the cooling water amount, and increasing the lubricating oil amount.

The cooling rate of the core material slab after solidified, that is, the average cooling rate at which the core material slab is cooled from 550 to 200°C is 0.10°C/second or more. In the behavior of dissolution and precipitation of the Mn-based compound, the average cooling rate of the core material slab after solidified at a temperature of from 550 to 200°C is extremely important. Almost no atoms are diffused in the aluminum alloy at a temperature of lower than 200°C, and thus almost no Mn-based compound precipitates. Further, at a point in time when the slab is removed from the mold, the slab in that place is at about 600°C, and the temperature of the slab can be measured at about 550°C or lower. Therefore, the temperature range is set to from 550 to 200°C. When the cooling rate is less than 0.10°C/second, the Mn-based compound excessively precipitates in the cooling process, so that a Mn dissolved amount cannot be satisfactorily secured. Increasing the cooling rate after solidification is achieved by increasing the cooling water amount and/or reducing the casting rate. The average cooling rate is preferably 0.13°C/ or more. The upper limit of the average cooling rate is determined depending on the casting method or apparatus, but, in the invention, the upper limit is about 0.2°C/second.

### 2-3. Homogenizing treatment step

The core material slab may be subjected to homogenizing treatment or may not be subjected to homogenizing treatment. When the core material slab is subjected to homogenizing treatment, the treatment is not conducted at a temperature as high as 510°C or more. That is, when the core material slab is subjected to homogenizing treatment, the treatment is conducted at a temperature of lower than 510°C. When the homogenizing treatment is conducted at 510°C or higher, the Mn-based compound excessively precipitates, so that a suitable Mn dissolved amount in the core material slab cannot be secured. In the step of heating the laminated material before hot lamination rolling, homogenization of the core material slab can be substantially achieved, and therefore it is preferred that the core material slab is not subjected to homogenizing treatment. When the homogenizing treatment is conducted at lower than 510°C, the treatment time is 0.5 to 12 hours. When the treatment time is less than 0.5 hour, the homogenization is insufficient, and, when the treatment time is more than 12 hours, a suitable Mn dissolved amount cannot be secured.

### 2-4. Hot lamination rolling step

In the hot lamination rolling step, the laminated material having the core material and the brazing material stacked on both surfaces of the core material slab is heated to 420 to 500°C, and the resultant material is subjected to hot rolling. When the heating temperature is lower than 420°C, the distortion resistance in hot lamination rolling is increased, making the lamination rolling difficult. On the other hand, when the heating temperature is higher than 500°C, the temperature of the rolled material may become higher than 510°C due to heat generation in processing upon rolling or the like. As a result, the Mn-based compound excessively precipitates in the core material, so that a suitable Mn dissolved amount in the core material cannot be secured. A preferred heating temperature is 430 to 490°C. The heating retention time is preferably 0.5 to 12 hours. When the retention time is less than 0.5 hour, there is a danger that the whole of the laminated material does not uniformly reach a predetermined temperature, which depends on the slab size or heating oven. As a result, there is a possibility that not only the Mn dissolved amount and precipitation of the Mn-based compound are non-uniform in the core material, but also a bonding failure is caused between the brazing material and the core material. On the other hand, when the retention time is more than 12 hours, the Mn-based compound excessively precipitates in the core material, so that a suitable Mn dissolved amount in the core material cannot be secured.

Further, when heating the laminated material, by reducing a temperature elevation time required until the temperature has reached the heating temperature, excessive precipitation of the Mn-based compound in the core material can be suppressed, so that a suitable Mn dissolved amount in the core material can be secured. Therefore, the temperature elevation time required until the temperature has reached the heating temperature is preferably 15 hours or less.

When contact bonding (cladding) of the core material and the brazing material is completed until the thickness of the laminated material is reduced by 10% (at a time when the hot rolling ratio has reached 10%) after the start of the hot lamination rolling and the temperature of the rolled sheet at this point in time is controlled to be 450°C or lower, a suitable Mn dissolved amount in the core material can be secured. However, when this temperature is too low, a bonding failure is likely to occur. Therefore, the temperature of the rolled sheet at a time when the hot rolling ratio has reached 10% is 370 to 450°C. When the temperature of the rolled sheet during the rolling is lower than 370°C, the brazing material and the core material cannot be satisfactorily bonded together. On the other hand, when the temperature of the rolled sheet during the rolling is higher than 450°C, the Mn-based compound in the core material excessively precipitates, so that a suitable Mn dissolved amount in the core material cannot be secured. A preferred temperature of the rolled sheet at a time when the hot rolling ratio has reached 10% is 380 to 440°C.

Further, the material being subjected to hot rolling has strain introduced, though at a high temperature of 200°C or more. Under conditions in which the material is at a high temperature and has strain introduced, it is likely that the Mn-based compound precipitates in the core material. By controlling the hot lamination rolling so that the temperature at a time of completion of the hot lamination rolling is lowered and the total time for the hot lamination rolling step is reduced, a suitable Mn dissolved amount in the core material can be secured. The temperature of the rolled sheet at a time of completion of the hot rolling is preferably lower than 370°C, more preferably 350°C or lower, and the total time for the hot rolling step is preferably 60 minutes or less, more preferably 40 minutes or less.

The above-mentioned temperature controlling of the hot rolled sheet can be achieved by adjusting at least one of the temperature of the roll for rolling, the number of injection inlets of the lubricating coolant, the amount of the lubricating coolant injected, the one-pass rolling reduction, and the sheet passing rate.

After the hot lamination rolling step, an annealing step is not provided during cold rolling, and the rolled sheet is subjected to primary cold rolling step. Under conditions in which the rolled sheet has strain introduced, it is likely that the Mn-based compound precipitates in the core material. Therefore, in the primary cold rolling step after the hot lamination rolling step, the rolling ratio is 85.0 to 99.5%. When the primary cold rolling ratio is less than 85.0%, precipitation of the Mn-based compound in the core material in the next annealing step is insufficient, so that a metallographic structure of the core material having the Mn-based compound densely dispersed therein cannot be obtained. On the other hand, when the primary cold rolling ratio is more than 99.5%, the Mn-based compound excessively precipitates in the core material in the next annealing step, so that a suitable Mn dissolved amount in the core material cannot be secured. A preferred primary cold rolling ratio is 91.0 to 99.0%.

When the core material is subjected to recrystallization in the annealing step, it is necessary that the annealing temperature be 300 to 450°C. The rolled material having strain introduced in the primary cold rolling step is annealed at a temperature as low as 450°C or less. When the annealing temperature is 450°C or less, the Mn-based compound can densely precipitate in the core material. When the annealing temperature is lower than 300°C, there is a possibility that the core material does not undergo recrystallization. On the other hand, when the annealing temperature is higher than 450°C, the Mn-based compound excessively precipitates in the core material, so that a suitable Mn dissolved amount in the core material cannot be secured. When the core material is subjected to recrystallization, a preferred annealing temperature is 310 to 440°C, and a more preferred annealing temperature is 310 to 430°C. With respect to the annealing method, any of continuous annealing and batch-wise annealing may be used.

When the core material is not subjected to recrystallization in the annealing step, it is necessary that the annealing temperature be 150 to less than 300°C. When the annealing temperature is lower than 150°C, recovery of the core material is insufficient, and hence grains caused by recrystallization during the heating for brazing become very fine, so that a resistance to high-temperature buckling and a resistance to self-corrosion cannot be secured. On the other hand, when the annealing temperature is 300°C or higher, there is a possibility that the core material undergoes recrystallization. When the core material is not subjected to recrystallization, a preferred annealing temperature is 160 to 290°C, and a more preferred annealing temperature is 170 to 280°C. With respect to the annealing method, any of continuous annealing and batch-wise annealing may be used.

Further, both when the core material is subjected to recrystallization in the annealing step and when the core material is not subjected to recrystallization, the heating retention time in the annealing step is preferably 0.5 to 12 hours. When the heating retention time is less than 0.5 hour, there is a possibility that the cold rolled material does not uniformly reach a predetermined temperature, so that the Mn dissolved amount and precipitation of the Mn-based compound are non-uniform in the core material, causing a dispersion in the quality. On the other hand, when the heating retention time is more than 12 hours, there is a possibility that the Mn-based compound excessively precipitates in the core material, so that a suitable Mn dissolved amount in the core material cannot be secured.

When the core material is subjected to recrystallization in the annealing step, the rolled sheet after the annealing step is subjected to secondary cold rolling step. Thus, the formability of a fin can be secured using recrystallization caused during the annealing as a processing structure. The rolling ratio in the secondary cold rolling step is 10 to 85%. When the cold rolling ratio is less than 10%, there is a possibility that the core material does not undergo recrystallization during the heating for brazing, so that a resistance to high-temperature buckling and a resistance to self-corrosion cannot be secured. On the other hand, when the rolling ratio in the secondary cold rolling is more than 85%, grains caused by recrystallization of the core material during the heating for brazing become very fine, so that a resistance to high-temperature buckling and a resistance to self-corrosion cannot be secured. A preferred secondary cold rolling ratio is 15 to 65%, and a more preferred secondary cold rolling ratio is 20 to 60%.

When the core material is not subjected to recrystallization in the annealing step, the rolled sheet after the annealing step is subjected to secondary cold rolling. In this case, the secondary cold rolling ratio is 3 to 40%. When the cold rolling ratio is less than 3%, stable production is difficult. On the other hand, when the secondary cold rolling ratio is more than 40%, grains caused by recrystallization of the core material during the heating for brazing become very fine, so that a resistance to high-temperature buckling and a resistance to self-corrosion cannot be secured. When the core material is not subjected to recrystallization, a preferred secondary cold rolling ratio is 6 to 35%, and a more preferred secondary cold rolling ratio is 10 to 30%.

Further, both when the core material is subjected to recrystallization in the annealing step and when the core material is not subjected to recrystallization, for securing the formability of a fin, the mechanical properties of the material can be precisely controlled by annealing the material at a low temperature after the secondary cold rolling. In this case, the annealing temperature is lower than 300°C. When the annealing temperature is 300°C or higher, there is a danger that the core material undergoes recrystallization. A preferred annealing temperature at which the core material does not undergo recrystallization is lower than 290°C, and a more preferred annealing temperature is lower than 280°C. With respect to the lower limit of the annealing temperature, there is no particular limitation, but, for securing the formability of a fin, it is necessary that the annealing temperature be at least 100°C.

When the core material is not subjected to recrystallization in the annealing step, a cold rolling step of subjecting to cold rolling the clad material after the hot lamination rolling step so as to have a final thickness without annealing the clad material during cold rolling, and an annealing step of annealing the clad material after the cold rolling step may be provided. The rolling ratio in the cold rolling step after the hot lamination rolling step is 85.0 to 99.5%. When the cold rolling ratio is less than 85.0%, precipitation of the Mn-based compound in the core material in the next annealing step is insufficient, so that a metallographic structure of the core material having the Mn-based compound densely dispersed therein cannot be obtained. On the other hand, when the cold rolling ratio is more than 99.5%, the Mn-based compound excessively precipitates in the core material in the next annealing step, so that a suitable Mn dissolved amount in the core material cannot be secured. The preferred cold rolling ratio is 91.0 to 99.0%.

It is necessary that the annealing temperature after the cold rolling step be 150 to less than 300°C. When the annealing temperature is lower than 150°C, recovery of the core material is insufficient, and hence grains caused by recrystallization during the heating for brazing become very fine, so that a resistance to high-temperature buckling and a resistance to self-corrosion cannot be secured. On the other hand, when the annealing temperature is 300°C or higher, there is a danger that the core material undergoes recrystallization. When the core material is not subjected to recrystallization, a preferred annealing temperature is 160 to 290°C, and a more preferred annealing temperature is 170 to 280°C. With respect to the annealing method, any of continuous annealing and batch-wise annealing may be used.

The heating retention time in the annealing step is preferably 0.5 to 12 hours. When the heating retention time is less than 0.5 hour, there is a possibility that the cold rolled material does not uniformly reach a predetermined temperature, so that the Mn dissolved amount and precipitation of the Mn-based compound are non-uniform in the core material, causing a dispersion in the quality. On the other hand, when the heating retention time is more than 12 hours, there is a possibility that the Mn-based compound excessively precipitates in the core material, so that a suitable Mn dissolved amount in the core material cannot be secured.

### Examples

Hereinbelow, examples of the present invention will be described with reference to the Examples of the present invention and Comparative Examples. The following Examples are made for showing the effects of the invention, and the Examples should not be construed as limiting the technical scope of the invention.

A core material alloy having the alloy composition shown in Table 1 and a brazing material alloy having the alloy composition shown in Table 2 were individually cast by a direct chill casting process to obtain a core material slab and a brazing material slab. With respect to the core material slab, one which was subjected to homogenizing treatment and one which was not subjected to homogenizing treatment were prepared. The brazing material slab is not subjected to homogenizing treatment. Then, each of the slabs was machined. Further, the brazing material slab was heated to 500°C and subjected to hot rolling so as to have a thickness such that a predetermined degree of cladding was obtained. Then, the brazing material rolled sheet which had been subjected to hot rolling was stacked on both surfaces of the core material slab, and the resultant laminated material was heated and subjected to hot lamination rolling to prepare a clad material. After the hot lamination rolling, the clad material was subjected to primary cold rolling and annealed. After the annealing, the clad material in which the core material was subjected to recrystallization and the clad material in which the core material was not subjected to recrystallization were individually further subjected to secondary cold rolling so as to have a final thickness, obtaining brazing sheet fin material samples. Further, there was also prepared a brazing sheet fin material sample which was not subjected to primary cold rolling after the hot lamination rolling but subjected to cold rolling so as to have a final thickness and annealed (clad material which was not subjected to recrystallization).

### [Table 1]

**Table 1**

| | Reference symbol for core material | Composition of core material (mass%) | | | | | | | | | | |
|---|---|---|---|---|---|---|---|---|---|---|---|---|
| | | Si | Fe | Mn | Zn | Cu | Zr | Ti | Cr | V | Al | Si+Fe |
| Within the range of the invention | A1 | 0.05 | 0.3 | 1.2 | - | - | - | - | - | - | Remainder | 0.35 |
| | A2 | 0.4 | 0.3 | 1.2 | - | - | - | - | - | - | Remainder | 0.7 |
| | A3 | 0.8 | 0.3 | 1.9 | - | - | - | - | - | - | Remainder | 1.1 |
| | A4 | 0.4 | 0.1 | 0.9 | 3.0 | 0.3 | 0.05 | 0.05 | - | - | Remainder | 0.5 |
| | A5 | 0.1 | 0.8 | 1.2 | 0.3 | - | 0.3 | - | - | - | Remainder | 0.9 |
| | A6 | 0.4 | 0.05 | 1.2 | - | 0.5 | - | - | 0.05 | 0.05 | Remainder | 0.45 |
| | A7 | 0.4 | 0.3 | 0.8 | - | 0.05 | - | 0.3 | - | - | Remainder | 0.7 |
| | A8 | 0.6 | 0.3 | 2.0 | 0.5 | - | - | - | 0.3 | - | Remainder | 0.9 |
| | A9 | 0.7 | 0.7 | 1.4 | 2.7 | - | 0.2 | - | - | 0.3 | Remainder | 1.4 |
| Outside the range of the invention | A10 | - | 0.6 | 1.8 | - | - | - | - | - | - | Remainder | 0.6 |
| | A11 | 0.2 | - | 1.3 | - | - | - | - | - | - | Remainder | 0.2 |
| | A12 | 1.0 | 0.3 | 1.2 | - | - | - | - | - | - | Remainder | 1.3 |
| | A13 | 0.4 | 1.0 | 1.4 | - | 0.6 | - | - | - | - | Remainder | 1.4 |
| | A14 | 0.3 | 0.2 | 0.6 | 3.2 | - | - | - | - | - | Remainder | 0.5 |
| | A15 | 0.4 | 0.3 | 2.2 | - | - | - | - | - | - | Remainder | 0.7 |
| | A16 | 0.4 | 0.3 | 1.2 | - | - | 0.4 | 0.4 | 0.4 | 0.4 | Remainder | 0.7 |
| | A17 | 0.6 | 0.7 | 1.0 | 0.1 | - | - | - | - | - | Remainder | 1.3 |

### [Table 2]

**Table 2**

| | Reference symbol for brazing material | Composition of brazing material (mass%) | | | | | | |
|---|---|---|---|---|---|---|---|---|
| | | Si | Fe | Zn | Cu | Na | Sr | Al |
| Within the range of the invention | B1 | 9.0 | 0.1 | - | - | - | - | Remainder |
| | B2 | 6.0 | 0.05 | - | - | - | - | Remainder |
| | B3 | 13.0 | 0.8 | - | - | - | - | Remainder |
| | B4 | 7.0 | 0.6 | 3.0 | 0.1 | 0.003 | 0.005 | Remainder |
| | B5 | 12.0 | 0.7 | 0.3 | 0.6 | 0.05 | 0.003 | Remainder |
| | B6 | 8.0 | 0.5 | 2.7 | - | 0.02 | 0.02 | Remainder |
| | B7 | 11.0 | 0.2 | 0.5 | 0.7 | 0.005 | 0.05 | Remainder |
| Outside the range of the invention | B8 | 9.0 | 0.4 | 3.2 | - | - | - | Remainder |
| | B9 | 5.0 | 0.4 | - | 1.0 | - | - | Remainder |
| | B10 | 14.0 | 0.7 | 0.1 | - | - | - | Remainder |
| | B11 | 9.0 | 1.0 | - | 0.05 | - | - | Remainder |

In the alloy composition tables shown in Tables 1 and 2, the symbol "-" means that the content is not more than the limit of detection of the spark discharge emission spectral analyzer, and the "Remainder" means a total of the remaining Al and unavoidable impurities.

Further, using the above-prepared brazing sheet fin material, heating for brazing was performed. This heating for brazing is heating corresponding to brazing, specifically, the brazing sheet fin material is heated in a furnace having a nitrogen gas atmosphere and maintained at 600°C for 3 minutes, and then cooled to room temperature at a cooling rate of 100°C/minute.

The combination of the core material and the brazing material, the average cooling rate of the core material slab (at from 550 to 200°C), the homogenizing treatment temperature, the heating temperature for the laminated material in hot lamination rolling, the temperature of the rolled sheet at a time when the hot rolling ratio has reached 10%, the primary cold rolling ratio, the annealing temperature, the structure after the annealing, the average degree of cladding for each surface, the secondary cold rolling ratio, the final annealing temperature, the final thickness, and the productivity in the production process are shown in Tables 3 and 4. When no problem occurred throughout the production process and rolling could be conducted so that the rolled sheet material had a final thickness, the productivity was ranked "○", and, when formation of cracks was caused during the casting or rolling or a bonding failure occurred between the core material and the brazing material, so that production of the rolled sheet material having a final thickness was not able to be done, the productivity was ranked "×". Further, the average cooling rate upon solidifying the melt was 0.5 to 2.0°C/second, and, in heating the laminated material, a temperature elevation time required until the temperature had reached the heating temperature was 8 to 15 hours, and the temperature of the rolled sheet at a time of completion of the hot lamination rolling step was 200 to 370°C.

In Tables 3 and 4, Examples 1, 4, 8, 9, 11, 12, 16, and 18 to 20 of the invention and Comparative Examples 21 to 45, 49, and 50 are the Examples of the invention and Comparative Examples for claim 8, Examples 2, 5, 10, 13 to 15, and 17 of the invention and Comparative Examples 46 and 47 are the Examples of the invention and Comparative Examples for claim 9, and Examples 3, 6, and 7 of the invention and Comparative Example 48 are the Examples of the invention and Comparative Example for claim 11. Examples 9 and 10 of the invention show an embodiment of claim 10, and Examples 3, 12, and 14 of the invention and Comparative Examples 30, 34, 36, 49, and 50 show an embodiment of claim 12. Further, in the Examples of the invention and Comparative Examples for claim 11, the rolling ratio in the cold rolling step was shown in the column for the primary cold rolling, and final annealing was not conducted after the secondary cold rolling step and therefore, the final annealing temperature after the secondary cold rolling step was indicated by "-".

### [Table 3]

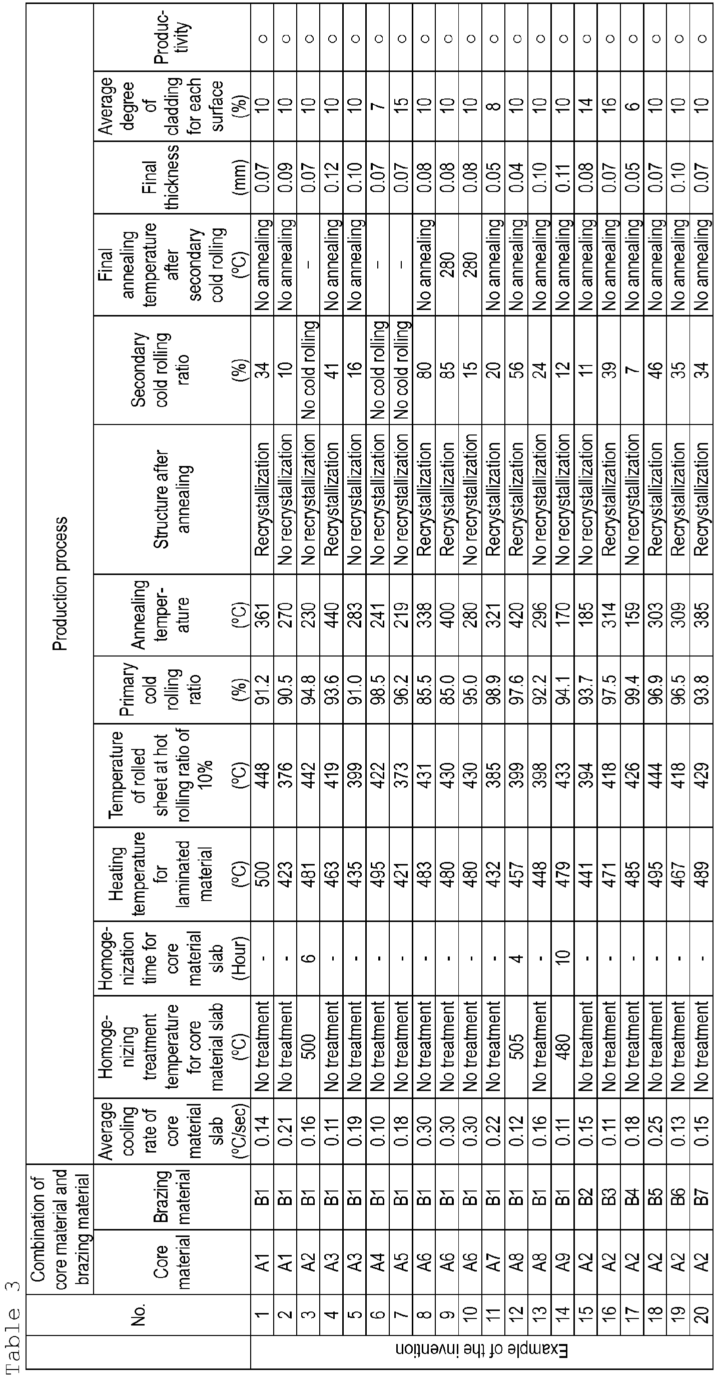

### [Table 4]

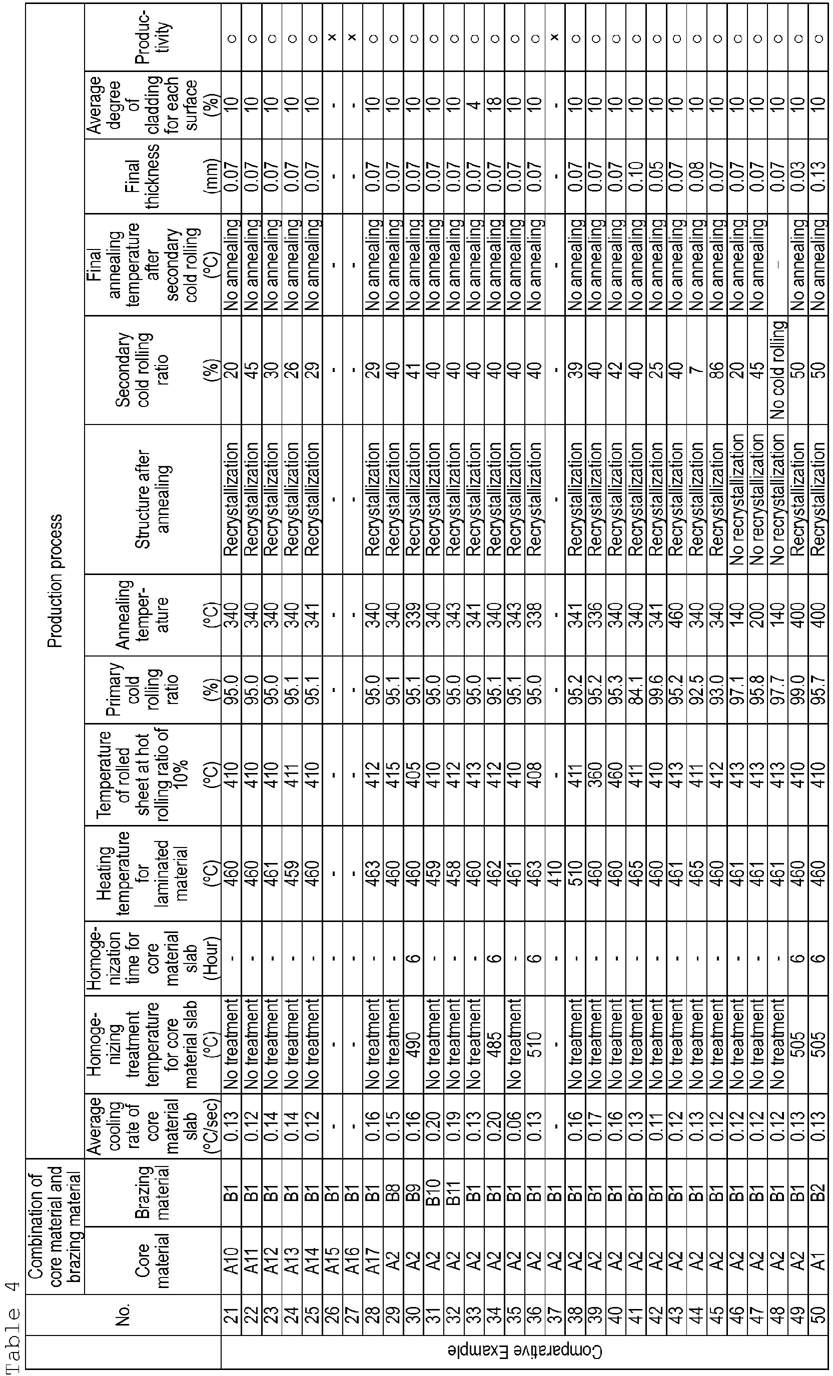

With respect to the above-prepared brazing sheet fin material samples, measurement of an electrical conductivity and an average distance between particles before and after heating for brazing, measurement of a tensile strength after heating for brazing, and evaluation of the high-temperature buckling property, brazeability, and resistance to self-corrosion were carried out. The methods for the measurement and evaluation are as described below. In the Comparative Examples shown in Table 4 in which the productivity was ranked "×", a sample could not be produced, and therefore the above evaluation could not be conducted.

### (Measurement of an electrical conductivity)

With respect to each of the samples before and after heating for brazing, an electric resistance was measured in a thermostatic chamber at 20°C in accordance with JIS H0505. Measurement was made at 3 sites in the same sample, and an arithmetic mean of the measured values was obtained as an electrical conductivity.

### (Measurement of an average distance between particles)

With respect to each of the samples before and after heating for brazing, an image of an L-LT plane at the middle of the thickness of the sheet was taken by means of a transmission electron microscope (TEM) at a magnification of 50,000 times, and an average distance between particles of the Mn-based compound having an equivalent circular diameter of 0.05 to 0.50 mm with respect to the sample before heating for brazing and an average distance between particles of the Mn-based compound having an equivalent circular diameter of 0.50 mm or less with respect to the sample after heating for brazing were individually measured using an image analysis soft. Measurement was made in 5 fields of view of the same sample, and an arithmetic mean of the measured values was obtained as an average distance between particles.

The average distance between particles in the invention is defined as an average of distances between the grain surfaces when half lines connecting center points of all the grains in a TEM image are drawn so that any of the half lines do not cross. An elemental analysis using an energy dispersive X-ray spectrometer (EDS) was made to confirm that a grain having a black contrast in the TEM image is the Mn-based compound.

### (Measurement of a tensile strength)

Each sample after heating for brazing was formed into a shape in accordance with JIS No. 13 B, and subjected to tensile test at room temperature to measure a tensile strength. When the tensile strength after heating for brazing was 130 MPa or more, the sample was judged acceptable (○), and, when the tensile strength after heating for brazing was less than 130 MPa, the sample was judged unacceptable (×).

### (Evaluation of resistance to high-temperature buckling)

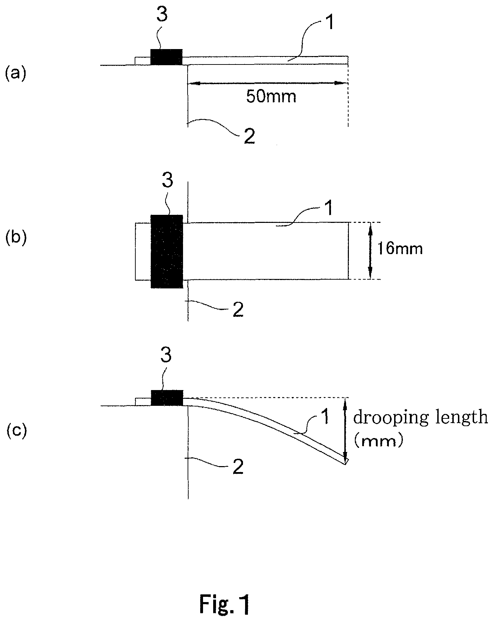

Diagrammatic views of the evaluation of the resistance to high-temperature buckling using a sag test apparatus are shown in Figs. 1(a) to 1(c). A test specimen 1 having a width of 16 mm and a length of 60 mm was cut out from each sample, and a 50 mm overhang portion of the specimen was held in a cantilevered form on a testing stand 2 using a fixture 3 and subjected to heating for brazing, and then a drooping length of the test specimen 1 was measured. Fig. 1(a) shows a diagrammatic front view of the state before heating, Fig. 1(b) shows a diagrammatic plan view of the state in Fig. 1(a), and Fig. 1(c) shows a diagrammatic front view of the state of sagging after heating. When the sagging amount after heating for brazing was less than 30 mm, the resistance to high-temperature buckling was judged acceptable (○), and, when the sagging amount was 30 mm or more, the resistance to high-temperature buckling was judged unacceptable (×).

### (Evaluation of brazeability)

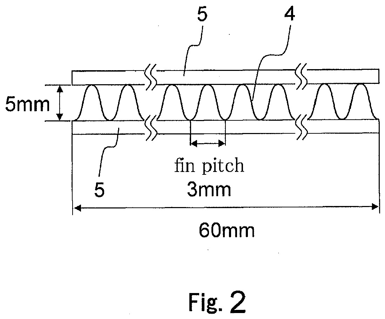

A diagrammatic front view of the test specimen used in the evaluation of the brazeability is shown in Fig. 2. Each sample was corrugated to prepare a fin material 4, and, as shown in Fig. 2, a miniature core specimen having disposed, on both sides of the fin material 4, A3003 plates 5 having a thickness of 0.5 mm, a width of 16 mm, and a length of 60 mm was prepared. The prepared miniature core specimen was immersed in a fluoride flux suspension having a concentration of 5% and dried and then subjected to heating for brazing. When the fin joint ratio in the miniature core specimen was 95% or more and no melting was caused in the fin sample, the brazeability was judged acceptable (○), and, when the fin joint ratio was less than 95% and/or melting was caused in the fin sample, the brazeability was judged unacceptable (×).

The fin joint ratio was defined as a value obtained by dividing the total of the joint lengths of the fin material 4 and plate 5 by (the width of the corrugated fin) × (the number of corrugations of the fin). The total of the joint lengths of the fin material 4 and plate 5 was obtained by peeling the plate 5 from the fin material 4 in the miniature core specimen after heating for brazing and measuring lengths of the individual joint portions and determining a total of the measured lengths.

### (Evaluation of resistance to self-corrosion)

With respect to a single sheet of each sample after heating for brazing, a SWAAT (Sea Water Acetic Acid Test) test in accordance with ASTM G85 was conducted for 30 hours, and the state of corrosion of each sample was examined. When corrosion did not penetrate the sheet in the thicknesswise direction, the resistance to self-corrosion was judged acceptable (○), and, when corrosion penetrated the sheet in the thicknesswise direction, the resistance to self-corrosion was judged unacceptable (×).

The results of the above tests and the results of the above evaluations are shown in Tables 5 and 6.

### [Table 5]

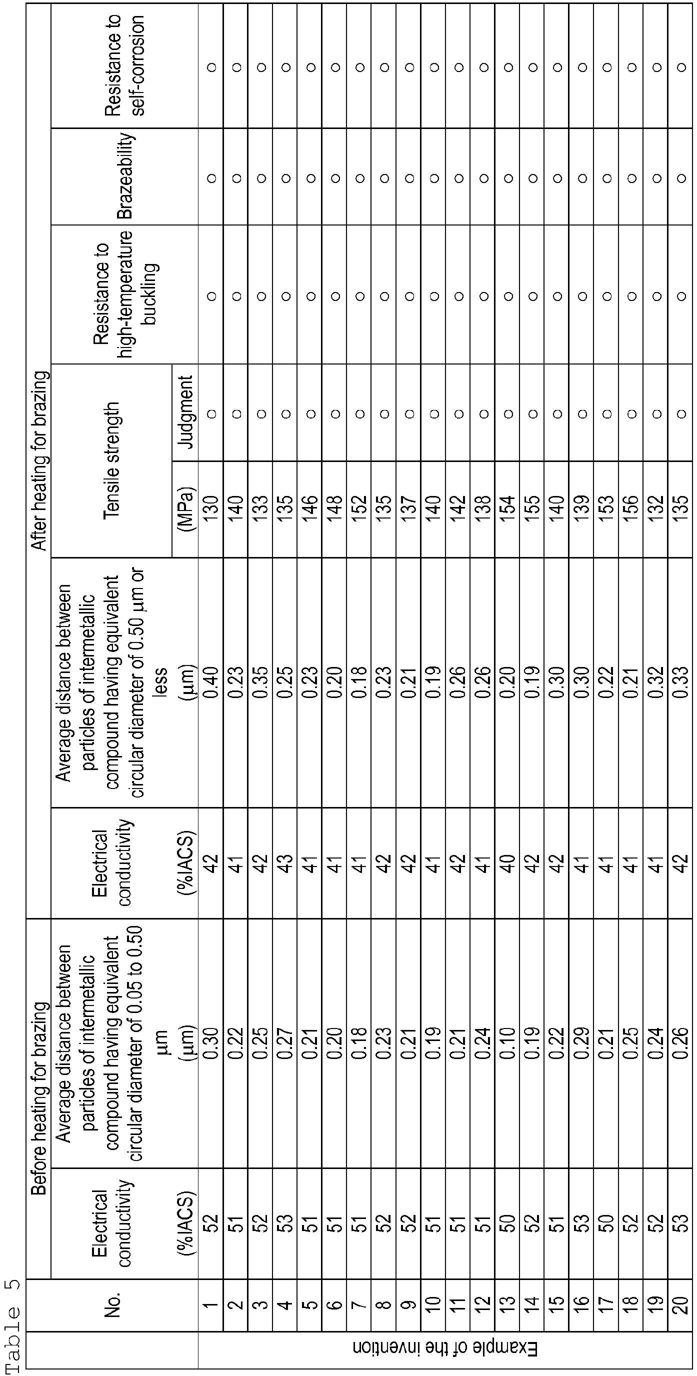

### [Table 6]

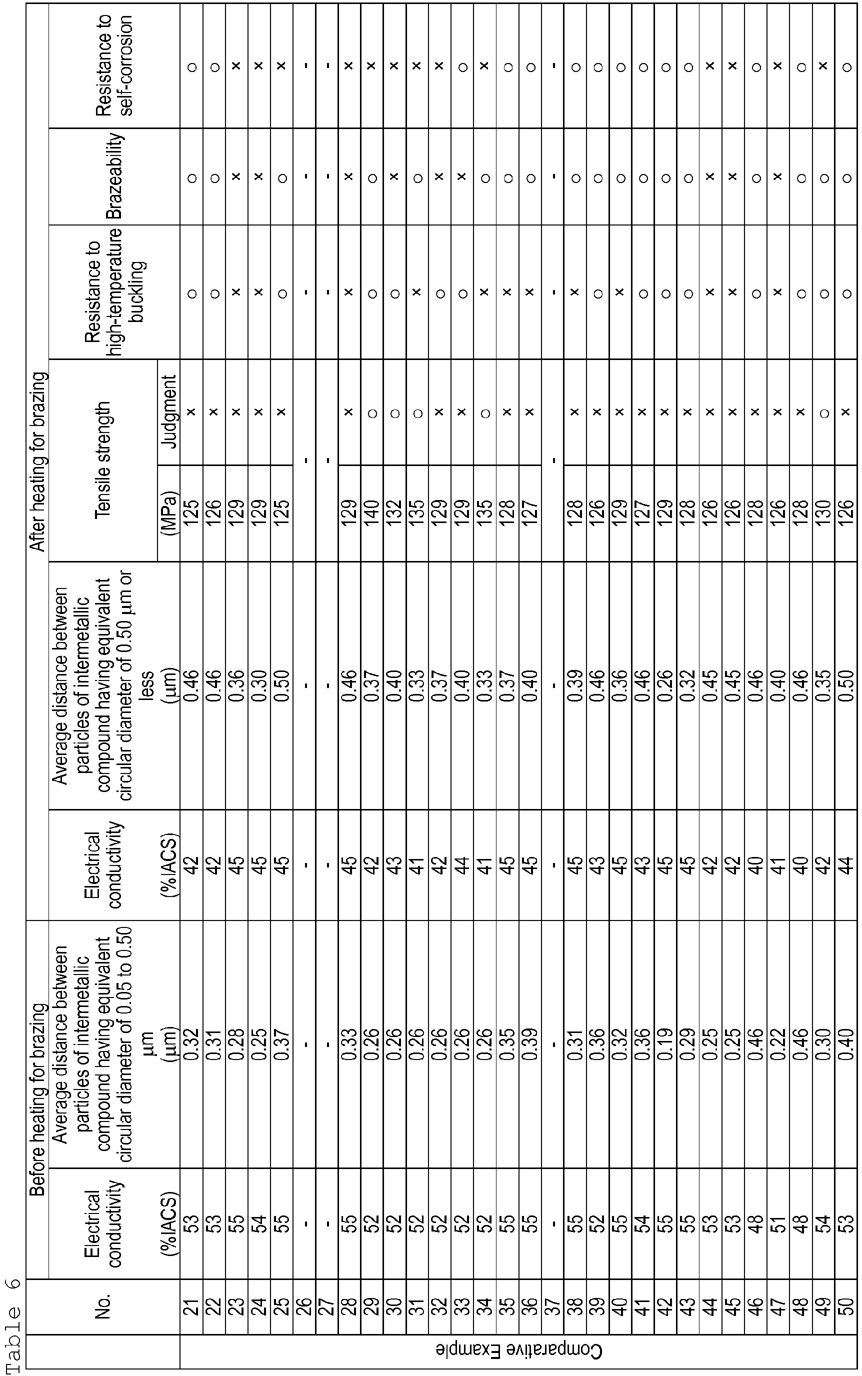

With referring to Tables 5 and 6, experimental results are discussed as follows. Firstly, in Examples 1 to 18, the alloy compositions for the core material and the brazing material fall within the range defined by the present invention, and their production conditions are also satisfy the conditions defined by the present invention. In these Examples, productivity is excellent, the electrical conductivity and the metallographic structure before and after heating for brazing also satisfy the conditions defined by the present invention. Further, in these Examples, the high tensile strength after heating for brazing, the resistance to high-temperature buckling, the brazeability and the resistance to self-corrosion were all acceptable.

Secondly, discussions for Comparative Examples are made. In Comparative Examples 19 to 26, following results were obtained while the alloy compositions for the core material fall out the range defined by the present invention.

In Comparative Example 21, since the Si content of the core material was too little, the formation of Mn-based compound after heating for brazing was insufficient. As a result, the grain-to-grain distance after heating for brazing was large and thus the strength after heating for brazing was unacceptable.

In Comparative Example 22, since the Fe content of the core material was too little, the formation of Mn-based compound after heating for brazing was insufficient. As a result, the grain-to-grain distance after heating for brazing was large and thus the strength after heating for brazing was unacceptable.

In Comparative Example 23, since the Si content of the core material was too much and the relation of Si content+Fe content≤Mn content was not satisfied, the electrical conductivity before and after heating for brazing was large. As a result, a suitable Mn dissolved amount in the core material cannot be secured and thus the strength after heating for brazing was unacceptable. Further, the resistance to high-temperature buckling, the brazeability and the resistance to self-corrosion were also unacceptable.

In Comparative Example 24, since the Fe content of the core material was too much, the electrical conductivity after heating for brazing was large. As a result, a suitable Mn dissolved amount in the core material cannot be secured and thus the strength after heating for brazing was unacceptable. Further, the resistance to high-temperature buckling, the brazeability and the resistance to self-corrosion were also unacceptable.

In Comparative Example 25, since the Mn content of the core material was too little, the electrical conductivity before and after heating for brazing was large. As a result, a suitable Mn dissolved amount in the core material cannot be secured and thus the strength after heating for brazing was unacceptable. Since the formation of Mn-based compound before and after heating for brazing was insufficient, the grain-to-grain distance after heating for brazing was large and thus it caused unacceptability of the strength after heating for brazing. Further, since the Zn content of the core material was too much, the resistance to self-corrosion was also unacceptable.

In Comparative Example 26, since the Mn content of the core material was too much, a crack was caused during the cold rolling, and thus a brazing sheet fin material could not be produced.

In Comparative Example 27, since the Zr, Ti, Cr and V contents of the core material was too much, a crack was caused during the cold rolling, and thus a brazing sheet fin material could not be produced.

In Comparative Example 28, since a sum of Si content and Fe content exceeds Mn content in the core material, the electrical conductivity before and after heating for brazing was large. As a result, a suitable Mn dissolved amount in the core material cannot be secured and thus the strength after heating for brazing was unacceptable. Further, the formation of Mn-based compound after heating for brazing was insufficient. As a result, the grain-to-grain distance after heating for brazing was large and thus it caused unacceptability of the strength after heating for brazing. Further, the resistance to high-temperature buckling, the brazeability and the resistance to self-corrosion were also unacceptable.

In Comparative Examples 29 to 32, following results were obtained while the alloy compositions for the brazing material fall out the range defined by the present invention.

In Comparative Example 29, since the Zn content of the brazing material was too much, the resistance to self-corrosion was unacceptable.

In Comparative Example 30, since the Si content of the brazing material was too little, the brazeability was unacceptable. Further, since the Cu content of the brazing material was too much, the resistance to self-corrosion was unacceptable.

In Comparative Example 31, since the Si content of the brazing material was too much, the resistance to high-temperature buckling was unacceptable. Further, since the Zn content of the brazing material was too little, the resistance to self-corrosion was unacceptable.

In Comparative Example 32, since the Fe content of the brazing material was too much, the brazeability and the resistance to self-corrosion were unacceptable. Further, since the Cu content of the brazing material was too little, the strength after heating for brazing was unacceptable.

In Comparative Examples 33 to 52, following results were obtained while the production conditions fall out the range defined by the present invention.

In Comparative Example 33, since the average degree of cladding for each surface was too small, the strength after heating for brazing and brazeability were unacceptable.

In Comparative Example 34, since the average degree of cladding for each surface was too large, the resistance to high-temperature buckling and the resistance to self-corrosion were unacceptable.

In Comparative Example 35, since the average cooling rate of the core material slab was too late, the electrical conductivity before and after heating for brazing was large. As a result, a suitable Mn dissolved amount in the core material cannot be secured and thus the strength after heating for brazing was unacceptable. Further, the resistance to high-temperature buckling was also unacceptable.

In Comparative Example 36, since the homogenizing treatment temperature of the core material slab was too high, ,the electrical conductivity before and after heating for brazing was large. As a result, a suitable Mn dissolved amount in the core material cannot be secured and thus the strength after heating for brazing was unacceptable. Further, the formation of Mn-based compound before heating for brazing was insufficient. As a result, the grain-to-grain distance before heating for brazing was large and thus it also caused unacceptability of the strength after heating for brazing. Further, the resistance to high-temperature buckling was also unacceptable.

In Comparative Example 37, since the heating temperature of the laminated material was too low, a pressure joining failure was caused between the core material and the brazing material and thus a brazing sheet fin material could not be produced.

In Comparative Example 38, since the heating temperature of the laminated material was too high, the electrical conductivity before and after heating for brazing was large. As a result, a suitable Mn dissolved amount in the core material cannot be secured and thus the strength after heating for brazing was unacceptable. Further, the resistance to high-temperature buckling was also unacceptable.

In Comparative Example 39, since the temperature of the rolled sheet at a time when the hot rolling ratio has reached 10% was too low, the formation of Mn-based compound before and after heating for brazing was insufficient. As a result, the grain-to-grain distance before and after heating for brazing was large and thus the strength after heating for brazing was unacceptable.

In Comparative Example 40, since the temperature of the rolled sheet at a time when the hot rolling ratio has reached 10% was too high, the electrical conductivity before and after heating for brazing was large. As a result, a suitable Mn dissolved amount in the core material cannot be secured and thus the strength after heating for brazing was unacceptable. Further, the resistance to high-temperature buckling was also unacceptable.

In Comparative Example 41, since the primary cold rolling ratio was too small, the formation of Mn-based compound before and after heating for brazing was insufficient. As a result, the grain-to-grain distance before and after heating for brazing was large and thus the strength after heating for brazing was unacceptable.

In Comparative Example 42, since the primary cold rolling ratio was too large, the electrical conductivity before and after heating for brazing was large. As a result, a suitable Mn dissolved amount in the core material cannot be secured and thus the strength after heating for brazing was unacceptable.

In Comparative Example 43, since the annealing temperature was too high, the electrical conductivity before and after heating for brazing was large. As a result, a suitable Mn dissolved amount in the core material cannot be secured and thus the strength after heating for brazing was unacceptable.

In Comparative Example 44, since the secondary cold rolling ratio after subjected to recrystallization at the annealing step is too small, a brazing erosion into the core material occurs during heating for brazing and thus the strength after heating for brazing was unacceptable. Further, the resistance to high-temperature buckling, the brazeability and the resistance to self-corrosion were also unacceptable.

In Comparative Example 45, since the secondary cold rolling ratio after subjected to recrystallization at the annealing step is too large, a brazing erosion into the core material occurs during heating for brazing and thus the strength after heating for brazing was unacceptable. Further, the resistance to high-temperature buckling, the brazeability and the resistance to self-corrosion were also unacceptable.

In Comparative Example 46, since the annealing temperature was too low, the formation of Mn-based compound before and after heating for brazing was insufficient. As a result, the grain-to-grain distance before and after heating for brazing was large and thus the strength after heating for brazing was unacceptable.

In Comparative Example 47, since the secondary cold rolling ratio after not subjected to recrystallization at the annealing step is too large, a brazing erosion into the core material occurs during heating for brazing and thus the strength after heating for brazing was unacceptable. Further, the resistance to high-temperature buckling, the brazeability and the resistance to self-corrosion were also unacceptable.

In Comparative Example 48, since the annealing temperature was too low, the formation of Mn-based compound before and after heating for brazing was insufficient. As a result, the grain-to-grain distance before and after heating for brazing was large and thus the strength after heating for brazing was unacceptable.

In Comparative Example 49, since the sheet thickness was too thin, the resistance to self-corrosion was unacceptable.

In Comparative Example 50, since the sheet thickness was too thick, the formation of Mn-based compound before and after heating for brazing was insufficient. As a result, the grain-to-grain distance before and after heating for brazing was large and thus the strength after heating for brazing was unacceptable.

### Industrial Applicability

The aluminum-alloy brazing sheet fin material for heat exchangers of the present invention is superior to the strength after heating for brazing and has excellent resistance to high-temperature buckling, brazeability and resistance to self-corrosion. Further the present brazing sheet fin material can be made more lightweight due to thickness reduction in compared with any conventional products and thus has a remarkably industrial applicability, especially as a heat exchanger for use in an automobile.

### Reference Signs List

- 1:: test specimen
- 2:: testing stand
- 3:: fixture
- 4:: fin material
- 5:: plate

## Claims

1. An aluminum-alloy clad brazing sheet fin material for heat exchangers having a core material and an Al-Si-based alloy brazing material clad on both surfaces of the core material,
wherein the core material comprises an aluminum alloy comprising 0.05 to 0.8 mass% Si, 0.05 to 0.8 mass% Fe, 0.8 to 2.0 mass% Mn and a balance of Al and unavoidable impurities, and the aluminum alloy satisfies a condition of Si content+Fe content≤Mn content,
the brazing material comprises the Al-Si-based alloy comprising 6.0 to 13.0 mass% Si, 0.05 to 0.8 mass% Fe and a balance of Al and unavoidable impurities,
before heating for brazing, the fin material has an average degree of cladding of 6 to 16% for each surface, a thickness of 40 to 120 µm and an electrical conductivity of 48 to 54% IACS and the core material has a metallographic structure having a distribution in which a Mn-based compound having an equivalent circular diameter of 0.05 to 0.50 µm is present at an average distance between particles of 0.05 to 0.35 µm, and
after heating for brazing, the fin material has an electrical conductivity of 40 to 44% IACS and the core material has a metallographic structure having a distribution in which a Mn-based compound having an equivalent circular diameter of 0.50 µm or less is present at an average distance between particles of 0.45 µm or less.

2. The aluminum-alloy clad brazing sheet fin material for heat exchangers according to claim 1, wherein the core material comprises the aluminum alloy further comprising 0.3 to 3.0 mass% Zn.

3. The aluminum-alloy clad brazing sheet fin material for heat exchangers according to claim 1 or 2, wherein the core material comprises the aluminum alloy further comprising 0.05 to 0.5 mass% Cu.

4. The aluminum-alloy clad brazing sheet fin material for heat exchangers according to any one of claims 1 to 3, wherein the core material comprises the aluminum alloy further comprising one or, two or more selected from 0.05 to 0.3 mass% Zr, 0.05 to 0.3 mass% Ti, 0.05 to 0.3 mass% Cr and 0.05 to 0.3 mass% V.

5. The aluminum-alloy clad brazing sheet fin material for heat exchangers according to any one of claims 1 to 4, wherein the brazing material comprises the Al-Si-based alloy further comprising 0.3 to 3.0 mass% Zn.

6. The aluminum-alloy clad brazing sheet fin material for heat exchangers according to any one of claims 1 to 5, wherein the brazing material comprises the Al-Si-based alloy further comprising 0.1 to 0.7 mass% Cu.

7. The aluminum-alloy clad brazing sheet fin material for heat exchangers according to any one of claims 1 to 6, wherein the brazing material comprises the Al-Si-based alloy further comprising one or two selected from 0.003 to 0.05 mass% Na and 0.003 to 0.05 mass% Sr.

8. The aluminum-alloy clad brazing sheet fin material for heat exchangers according to any one of claims 1 to 7, wherein the aluminum-alloy clad brazing sheet fin material has a tensile strength of 130 MPa or more after heating for brazing,

9. A method for producing the aluminum-alloy brazing sheet fin material for heat exchangers according to any one of claims 1 to 8, comprising:
a casting step of the aluminum alloys for the core material and the brazing material, respectively, by a direct chill casting process,
a hot lamination rolling step of subjecting to hot rolling a laminated material having the core material and the brazing material rolled to have a predetermined thickness stacked on both surfaces of the core material,
a primary cold rolling step of subjecting to cold rolling the clad material after the hot lamination rolling step without annealing the clad material during cold rolling,
an annealing step of annealing the clad material after the primary cold rolling step, and
a secondary cold rolling step of subjecting to cold rolling the clad material after the annealing step so as to have a final thickness without annealing the material during cold rolling,
wherein, in the casting step for the core material, the average cooling rate at which the core material slab after solidified is cooled from 550 to 200°C is 0.10°C/second or more,
wherein a homogenizing treatment step of subjecting the core material slab to homogenizing treatment at a temperature of 510°C or higher is not provided,
wherein, in the hot lamination rolling step, the heating temperature for the laminated material is 420 to 500°C, and the temperature of the rolled sheet at a time when the hot rolling ratio has reached 10% is 370 to 450°C,
wherein, in the primary cold rolling step, the cold rolling ratio is 85.0 to 99.5%,
wherein, in the annealing step, the core material is subjected to recrystallization at an annealing temperature of 300 to 450°C and, in the secondary cold rolling step, the cold rolling ratio is 10 to 85%.

10. A method for producing the aluminum-alloy brazing sheet fin material for heat exchangers according to any one of claims 1 to 8, comprising:
a casting step of the aluminum alloys for the core material and the brazing material, respectively, by a direct chill casting process,
a hot lamination rolling step of subjecting to hot rolling a laminated material having the core material and the brazing material rolled to have a predetermined thickness stacked on both surfaces of the core material,
a primary cold rolling step of subjecting to cold rolling the clad material after the hot lamination rolling step without annealing the clad material during cold rolling,
an annealing step of annealing the clad material after the primary cold rolling step, and
a secondary cold rolling step of subjecting to cold rolling the clad material after the annealing step so as to have a final thickness without annealing the material during cold rolling,
wherein, in the casting step for the core material, the average cooling rate at which the core material slab after solidified is cooled from 550 to 200°C is 0.10°C/second or more,
wherein a homogenizing treatment step of subjecting the core material slab to homogenizing treatment at a temperature of 510°C or higher is not provided,
wherein, in the hot lamination rolling step, the heating temperature for the laminated material is 420 to 500°C, and the temperature of the rolled sheet at a time when the hot rolling ratio has reached 10% is 370 to 450°C,
wherein, in the primary cold rolling step, the cold rolling ratio is 85.0 to 99.5%,
wherein, in the annealing step, the core material is not subjected to recrystallization at an annealing temperature of 150°C or higher to 300°C or lower, in the secondary cold rolling step, the cold rolling ratio is 3 to 40%.

11. A method for producing the aluminum-alloy brazing sheet fin material for heat exchangers according to claim 9 or 10, wherein the method further comprises an annealing step of annealing the rolled sheet at a temperature of 300°C or lower after the secondary cold rolling step.

12. A method for producing the aluminum-alloy brazing sheet fin material for heat exchangers according to any one of claims 1 to 8, comprising:
a casting step of the aluminum alloys for the core material and the brazing material, respectively, by a direct chill casting process,
a hot lamination rolling step of subjecting to hot rolling a laminated material having the core material and the brazing material rolled to have a predetermined thickness stacked on both surfaces of the core material,
a cold rolling step of subjecting to cold rolling the clad material after the hot lamination rolling step so as to have a final thickness without annealing the material during cold rolling,
an annealing step of annealing the clad material after the cold rolling step,
wherein, in the casting step for the core material, the average cooling rate at which the core material slab after solidified is cooled from 550 to 200°C is 0.10°C/second or more,
wherein a homogenizing treatment step of subjecting the core material slab to homogenizing treatment at a temperature of 510°C or higher is not provided,
wherein, in the hot lamination rolling step, the heating temperature for the laminated material is 420 to 500°C, and the temperature of the rolled sheet at a time when the hot rolling ratio has reached 10% is 370 to 450°C,
wherein, in the cold rolling step, the cold rolling ratio is 85.0 to 99.5%,
wherein, in the annealing step, the core material is not subjected to recrystallization at an annealing temperature of 150°C or higher to lower than 300°C.

13. A method for producing the aluminum-alloy brazing sheet fin material for heat exchangers according to any one of claims 9 to 12, wherein the method further comprises a homogenizing treatment step of subjecting the core material slab to homogenizing treatment at a temperature of lower than 510°C after the casting step for the core material.

14. A method for producing the aluminum-alloy brazing sheet fin material for heat exchangers according to any one of claims 9 to 13, wherein, in the casting step for the core material, the average cooling rate when a molten metal is solidified is 0.5°C/second or more.

15. A method for producing the aluminum-alloy brazing sheet fin material for heat exchangers according to any one of claims 9 to 14, wherein, when the laminated material is heated, a temperature elevation time required until the temperature has reached the heating temperature is 15 hours or less.

16. A method for producing the aluminum-alloy brazing sheet fin material for heat exchangers according to any one of claims 9 to 15, wherein the temperature of the rolled sheet at a time of completion of the hot lamination rolling step is lower than 370°C.
